# EUROPEAN PATENT SPECIFICATION

(11) **EP 1 903 832 B1**
(45) Date of publication and mention of the grant of the patent: **16.05.2012**
(21) Application number: 07116989.0
(22) Date of filing: 21.09.2007
(51) Int. Cl.: H04Q 11/04

(54) **A method and system for signal splitting and a splitter board**
Verfahren und System zur Signalteilung und Signalteilungsvorrichtung
Procédé et système pour répartition de signal et panneau de séparateur

(30) Priority: 22.09.2006 CN 200610139743
(43) Date of publication of application: 26.03.2008
(73) Proprietor: Huawei Technologies Co., Ltd., Longgang District, Shenzhen Guangdong 518129 (CN)
(72) Inventor: Xiao, Ruijie, Shenzhen, Guangdong Province 518129 (CN); Zhang, Wei, Shenzhen, Guangdong Province 518129 (CN); Xian, Jingshan, Shenzhen, Guangdong Province 518129 (CN); Ma, Jun, Shenzhen, Guangdong Province 518129 (CN); Li, Xiaodong, Shenzhen, Guangdong Province 518129 (CN)
(74) Representative: Kreuz, Georg Maria

(56) References cited:
- EP-A1- 1 549 037
- WO-A2-01/80574
- US-A- 6 115 466
- US-A1- 2004 086 110

## Description

### Field of the Invention

The present invention relates to the field of communications, and in particular, to a method and system for signal splitting and a splitter board.

### Background of the Invention

Internet is developing rapidly around the world, and broadband access has become an instant need for most Internet users. At present, there are mainly three ways of broadband access, including Cable TV network, Ethernet and Asymmetric Digital Subscriber Line (ADSL). Currently, telephone subscribers access the network mostly by using the twisted pair copper cable, i.e. the telephone line. Such a huge hardware infrastructure is an optimum platform for making use of the advantages of the ADSL technology. ADSL access scheme may be implemented without changing the lines, so that additional cost may be reduced. In order to implement the broadband access by using the telephone twisted pair cable, advanced modulation technology is necessary. With the advanced modulation technology, high rate data may be transmitted over the twisted pair cable. Such technology is generally referred to as XDSL technology.

Numerous home broadband services, such as Video On Demand or Web page browsing, are apparently asymmetric. In other words, the uplink traffic transmitted from home or a client personal computer to the network is far less than the downlink traffic transmitted from a Web page server site to the personal computer. In this case, it is quite reasonable to allow the downlink rate to be higher than the uplink rate, and the ADSL technology comes forth under such background.

In the ADSL technology, Plain Old Telephone Service (POTS) and broadband services (XDSL service) may be transmitted over the twisted pair cable simultaneously. When a signal transmitted from a user end is to be introduced into a switching network for switching, the narrowband signal and the broadband signal on the twisted pair cable should be separated and transmitted to Public Switch Telephone Network (PSTN) and Internet for switching respectively, and at the other end of the switching network, the narrowband signal and the broadband signal are put together and then transmitted to the user end on this side.

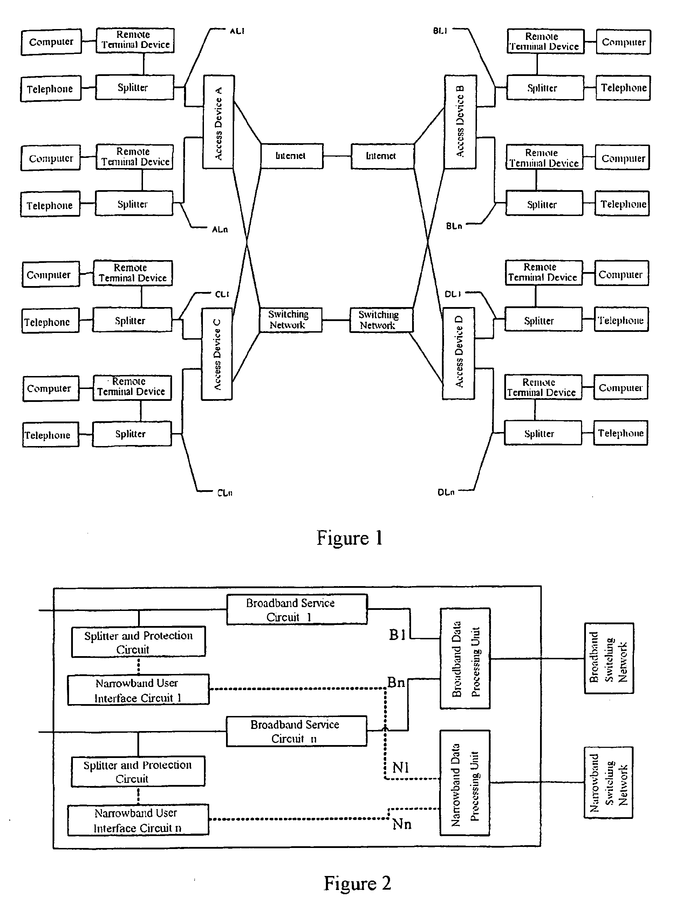

The procedure described above is as shown in Figure 1. Suppose a user telephone at the AL1 end needs to make a call to a user at the BLn end (i.e. to conduct a narrowband service), and a PC needs to conduct data intercommunication such as chatting over network with a PC at the DL1 end (i.e., conducting a broadband service). The signal from the PC on the AL1 end passes through a Remote Terminal Unit (RTU), and then is put together with the telephone signal by a Splitter (SPL). The broadband-narrowband mixed signal from the SPL is transmitted to an access device A. The access device A then splits the broadband-narrowband mixed signal on the AL1. The broadband signal in the broadband-narrowband mixed signal is transmitted to an Internet switch router and reaches the access device D at the destination DL1 end. In the access device D, the broadband signal is put together with the narrowband signal transmitted to the DL1 end (the narrowband signal exists if the telephone at this end is making a call, otherwise, the narrowband signal does not exist) and then is sent to the subscriber line at the DL1 end, thereby reaching the personal computer at the DL1 end. The narrowband signal is also sent to the access device B at its destination BLn end after being sent to PSTN for switching, and is put together with the broadband signal transmitted to the BLn end (the broadband signal exists if the personal computer at this end is accessing the network, otherwise the broadband signal does not exist) in the access device B, and then is sent to the subscriber line at the BLn end, thereby a call with the telephone at the BLn end may be made. The case of the transmission in the opposite direction is similar. It can be seen that the implementation of the ADSL access technology has no impact on the use of the ordinary telephone. The telephone of a user is able to connect to any other telephone within the entire network, and the personal computer of the user may be connected to the Internet at the same time.

The service board capable of processing the broadband service and the narrowband service simultaneously in the access device is called broadband-narrowband integration board, or integration board for short. In general, each board is able to support subscriber line services on a number of lines. The integration board shown in Figure 2 supports services on n lines, and is able to process the broadband-narrowband services on n subscriber lines simultaneously. The processes performed by the integration board for the signals transmitted on these lines are similar. Description is made here by taking the case on a first subscriber line in Figure 2 as an example. As to the uplink direction with respect to a user, the integration board first processes the mixed signal including a broadband signal (represented by CPE1) and a narrowband signal (represented by PHONE1) sent from the subscriber line 1 as follows: splitting out the narrowband signal through a splitter, sending the narrowband signal into a narrowband subscriber interface circuit 1 for processing, then into a narrowband data processing unit, and finally into a narrowband switching network; while the broadband signal passes through a broadband service circuit 1 and broadband data processing unit, and finally is sent into a broadband switching network. The transmission direction of this data corresponds to the uplink direction, and in comparison with the process in the uplink direction, the process performed by the integration board for the downlink direction is just in reverse: the broadband data processing unit distributes the data from the broadband switching network to any one of lines B1~Bn in accordance with requirements, and the narrowband data processing unit distributes the data from the narrowband switching network to any one of lines N1~Nn, so that the signals of B1 and N1 are put together via the splitter and sent to the subscriber line 1 (CPE1+PHONE1). The case is similar for other subscriber lines.

The integration board in Figure 2 has a signal splitter on itself, thus the subscriber line with the mixed broadband-narrowband signal may be connected to the integration board for processing. However, if the integration board is only adapted to process the broadband service, the narrowband signal split out by the splitter on the integration board can not be sent to other narrowband processing device, which may lead to waste to some extent. Furthermore, in addition to the integration board, there are also various processing boards only for the broadband service or the narrowband service, which do not have the capability of signal splitting. Therefore, a splitter board is needed which is specially adapted to split the broadband-narrowband signal on the subscriber line.

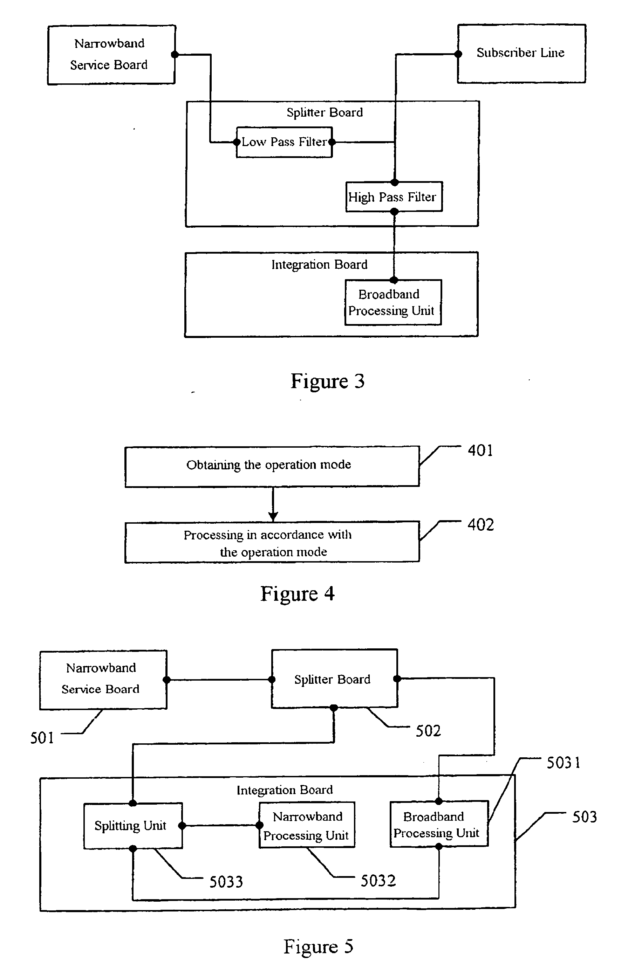

As shown in Figure 3, the operating principle of the splitter board is as follows: in the ADSL technology, the narrowband signal and the broadband signal are transmitted over a single telephone line in different frequencies, the frequency band used by the telephone service is in the range of 300Hz-3.4kHz, while the frequency band used by the broadband service is in the range of 25kHz-1104kHz. Summarily, the principle of the implementation of the splitter board is to filter out the frequency desired from the entire transmission frequency band with a filter, so that the splitting of the broadband signal and the narrowband signal may be realized.

A method for signal splitting in the prior art is: inputting the signal on a subscriber line into a splitter board for signal splitting, sending the narrowband signal split out to a narrowband service board for processing, and sending the broadband signal split out to an ADSL service board for processing.

However, since the signal splitting in the prior art does not take the operation mode of the integration board into consideration, the narrowband signal resources may be wasted when the integration board is switched from a COMBO mode to an ADSL mode, and the splitter resources may be wasted when the integration board is switched from the ADSL mode to the COMBO mode.

US-A-6 115 466 discloses a dual-mode filter network for an ADSL, which has a first frequency response when the POTS telephone is on-hook and has a second frequency response when the POTS telephone is off-hook. A detector is used to determine the on-hook/off-hook status. The dual-mode filter network may be situated at the central unit and connected to a PSTN while the detector at the remote unit connected between the POTS low pass filter and the POTS telephone. In such case, the detector outputs a signal which is transmitter via the twisted pair on an overhead channel. Alternatively, the dual-mode filter and the detector may be co-located at either the central unit or at the remote unit. Regardless of where it, or the detector are located, the dual-mode filter network has at lest different combinations of components which are activated, depending on the on-hook/off-hook status of the POTS phone.

In US 2004/086110 A1, it is disclosed that in signal-splitting equipment for multiple subscribers, circuitry is disposed on a signal-splitter card which connects with a back plane providing physical support and electrical connection to other splitter cards and to distant sites, as well as to an interface with a system conducting automatic testing of DSL circuits. Each splitter card also carries a separate relay card with signal-routing relay circuitry, the relay card being affixed by means of a switching connector having bypass circuitry which ensures normal communication of DSL signals and audio signals in the event that a relay card is disconnected from its signal-splitter card, During a testing of the equipment, the system operates the relays of the relay cards of the respective signal-splitter cards for a connection oftest equipment to various equipment associated with a specific subscriber.

### Summary of the Invention

The embodiments of the present invention provide a method and a system for signal splitting and a splitter board, with which the utilization rate of the network resources may be improved.

A splitter board according to an embodiment of the invention, including: a subscriber line interface, an integration board interface, a narrowband service board interface, a low pass filter and at least three switching devices, wherein the switching devices are adapted to switch a subscriber signal according to an operation mode of an integration board, and the process in which the switching devices switch the subscriber signal includes:

dividing the subscriber signal received via the subscriber line interface into a first subscriber signal and a second subscriber signal, sending the first subscriber signal to the narrowband service board interface via the low pass filter, and sending the second subscriber signal to the integration board interface, when the operation mode is a broadband processing mode;

sending the subscriber signal received via the subscriber line interface to the integration board interface directly, when the operation mode is an combination processing mode; and

sending the subscriber signal received via the subscriber line interface to the narrowband service board interface directly, when the operation mode is a detecting mode.

Optionally, the splitter board further includes an isolation capacitor..

Optionally, the switching devices include a first relay (J1), a second relay (J2), and a third relay (J3);

the first relay (J1) comprises a first base point (K1), a first contact point (C1) and a second contact point (C2), the second relay (J2) comprises a second base point (K2), a third contact point (C3) and a fourth contact point (C4), the third relay (J3) comprises a third base point (K3), a fifth contact point (C5) and a sixth contact point (C6);

when the operation mode is the broadband processing mode, the first base point (K1) is connected to the second contact point (C2), the second base point (K2) is connected to the fourth contact point (C4) and the third base point (K3) is connected to the sixth contact point (C6), the subscriber line interface is connected to the narrowband service board interface through the first relay (J1), the low pass filter and the second relay (J2), and meanwhile, the subscriber line interface is connected to the integration board interface through the first relay (J1), the third relay (J3) and the isolation capacitor;

when the operation mode is the combination processing mode, the first base point (K1) is connected to the second contact point (C2), the second base point (K2) is connected to the third contact point (C3) and the third base point (K3) is connected to the fifth contact point (C5), the subscriber line interface is connected to the integration board interface through the first relay (J1) and the third relay (J3); and

when the operation mode is the detecting mode, the first base point (K1) is connected to the first contact point (C1) and the second base point (K2) is connected to the third contact point (C3), the subscriber line interface is connected to the narrowband service board interface through the first relay (J1) and the second relay (J2).

The embodiments of the invention further provides a system for signal splitting, which includes a splitter board as described above, further including: an integration board connected with the splitter board, the integration board is adapted to receive and process a signal from the splitter board in a broadband processing mode and a combination processing mode.

Optionally, the system further includes a narrowband service board, which is adapted to receive a narrowband signal split out by the splitter board when the operation mode of the integration board is a broadband processing mode or a detecting mode.

Optionally, the integration board includes: a splitting unit, a broadband processing unit and a narrowband processing unit; the splitting unit is adapted to receive the subscriber signal from the splitter board in the combination processing mode, and split the subscriber signal into a broadband signal and a narrowband signal; the broadband processing unit is adapted to process the broadband signal sent by the splitter board in the broadband processing mode, and process the broadband signal split out by the splitting unit in the combination processing mode; and the narrowband processing unit is adapted to process the narrowband signal split out by the splitting unit in the combination processing mode.

The embodiments of the invention further provides a method for signal splitting, including:

obtaining an operation mode of an integration board; and

processing, by a splitter board, a subscriber signal received in accordance with the operation mode.

Optionally, the method further including:

splitting and sending, by the splitter board, the subscriber signal when the operation mode is a broadband processing mode;

performing, by the splitter board, transparent transmission for the subscriber signal when the operation mode is an combination processing mode; and

forwarding, by the splitter board, the subscriber signal when the operation mode is a detecting mode;

wherein performing, by the splitter board, transparent transmission for the subscriber signal comprises: sending the subscriber signal received to the integration board directly..

Optionally, the splitting and sending, by the splitter board, the subscriber signal includes:

dividing the subscriber signal into a first subscriber signal and a second subscriber signal;

obtaining a narrowband signal by passing the first subscriber signal through a low pass filter on the splitter board, and sending the narrowband signal to a narrowband service board;

obtaining a broadband signal by passing the second subscriber signal through an isolation capacitor on the splitter board, and sending the broadband signal to the integration board.

Optionally, forwarding, by the splitter board, the subscriber signal includes: sending the subscriber signal received to a narrowband service board directly.

It can be seen from the above solutions that following advantages may be provided by the embodiments of the invention:

firstly, different ways for signal splitting is determined in accordance with the operation mode of the integration board in the embodiments of the present invention, therefore, the way for splitting the narrowband signal may be adjusted when the integration board is switched from the COMBO mode to the ADSL mode, so that the utilization rate of the network resources may be improved;

secondly, according to the embodiments of the invention, different ways for signal splitting are implemented in different operation modes on the splitter board by adding several relays and capacitors on the original splitter board, without modifying the original interfaces of the splitter board, thus the splitter board according to the embodiments of the invention may be compatible with the existing communication devices, thereby enlarging the application range of the present invention.

### Brief Description of the Drawings

Figure 1 is a diagram showing the reference model of an XDSL broadband access system;

Figure 2 is a block diagram showing the function structure of an integration board;

Figure 3 is a schematic diagram showing the frame structure of the splitter board in the prior art;

Figure 4 is a diagram showing the flowchart of a first embodiment of the present invention;

Figure 5 is a schematic diagram of a second embodiment of the present invention;

Figure 6 is a schematic diagram of a third embodiment of the present invention;

Figure 7 is a schematic diagram of a fourth embodiment of the present invention;

Figure 8 is a schematic diagram of a fifth embodiment of the present invention;

Figure 9 is a schematic diagram of a sixth embodiment of the present invention.

### Detailed Description of the Embodiments

The embodiments of the present invention provide a method and a system for signal splitting and a splitter board, with which the utilization rate of the network resources may be improved.

Referring to Figure 4, the procedure of a first embodiment of the present invention includes the following processes:

401. Obtain the operation mode.

In this process, the operation mode of the integration board is obtained. In particular, there are three operation modes: ADSL mode, COMBO mode and detecting mode.

In the ADSL mode, the integration board processes the broadband signal only; in the COMBO mode, the integration board processes both the broadband signal and the narrowband signal; and in the detecting mode, the narrowband service board may be tested by a testing equipment through the splitter.

402. Process in accordance with the operation mode.

In this process, the splitter board processes the received subscriber signal in accordance with the operation mode.

In particular, when the operation mode is the broadband processing mode (i.e., ADSL mode), the process includes:

dividing the subscriber signal into a first subscriber signal and a second subscriber a signal;

obtaining a narrowband signal by passing the first subscriber signal through a low pass filter and filtering out the high frequency broadband signal, and sending the narrowband signal to a narrowband service board;

obtaining a broadband signal by passing the second subscriber signal through an isolation capacitor and sending the broadband signal to an integration board.

The isolation capacitor is adapted to isolate the narrowband feeding of the PSTN port and ADSL port.

When the operation mode is the combination processing mode (i.e., COMBO mode), the process includes the following:

a splitter board sends the subscriber signal directly to an integration board;

the integration board splits the received subscriber signal, sends the narrowband signal split out to a narrowband processing unit, and sends the broadband signal split out to a broadband processing unit.

In the present embodiment, the narrowband processing unit is a Plain Old Telephone Service (POTS) processing unit, and the broadband processing unit is an ADSL processing unit.

When the operation mode is the detecting mode, the process includes the following:

the splitter board sends the subscriber signal directly to the narrowband service board for signal board testing.

Referring to Figure 5, which shows a second embodiment of the present invention, in which the signal splitting system includes:

a narrowband service board 501, an integration board 503 and a splitter board 502.

The narrowband service board 501 is adapted to receive the narrowband signal split out by the splitter board 502, when the operation mode of the integration board 503 is the broadband processing mode or the detecting mode.

The integration board 503 is adapted to provide the splitter board 502 with the current operation mode.

The splitter board 502 is adapted to process the received subscriber signal in accordance with the operation mode.

The integration board 503 includes: a splitting unit 5033, a broadband processing unit 5031 and a narrowband processing unit 5032.

The splitting unit 5033 is adapted to receive the subscriber signal from the splitter board 502 in the combination processing mode, and split the subscriber signal into a broadband signal and a narrowband signal.

The broadband processing unit 5031 is adapted to process the broadband signal sent by the splitter board 502 in the broadband processing mode, or process the broadband signal split out by the splitting unit 5033 in the combination processing mode.

The narrowband processing unit 5032 is adapted to process the narrowband signal split out by the splitting unit 5033 in the combination processing mode.

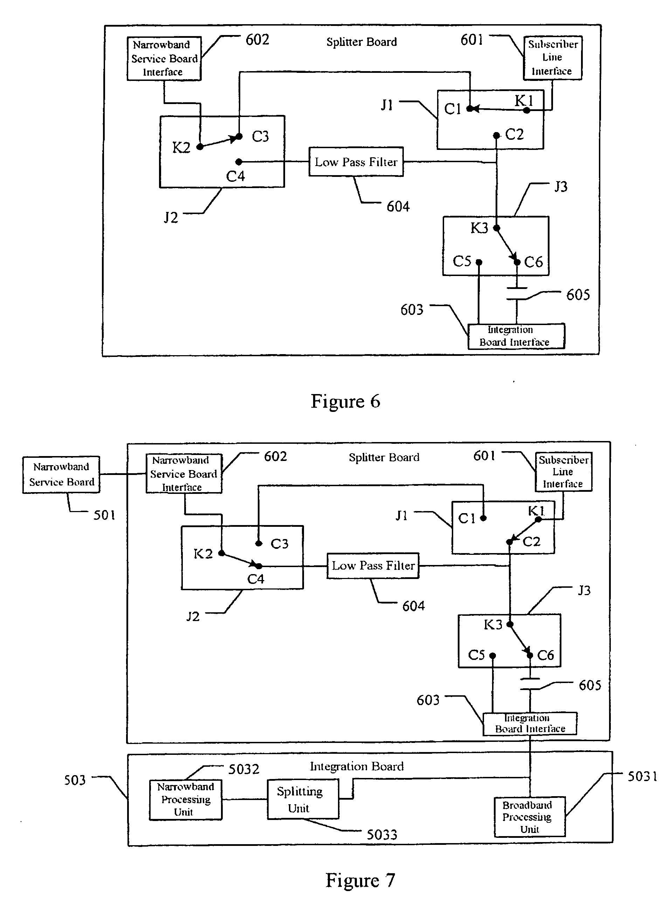

Figure 6 shows a third embodiment of the present invention, in which the splitter board includes: a subscriber line interface 601, an integration board interface 603, a narrowband service board interface 602, a low pass filter 604, a first relay J1, a second relay J2, a third relay J3 and an isolation capacitor 605.

The first relay J1 contains a first base point K1, a first contact point C1 and a second contact point C2; the second relay J2 contains a second base point K2, a third contact point C3 and a fourth contact point C4; and the third relay J3 contains a third base point K3, a fifth contact point C5 and a sixth contact point C6.

When the first base point K1 is connected to the second contact point C2, the second base point K2 is connected to the fourth contact point C4 and the third base point K3 is connected to the sixth contact point C6, then the subscriber line interface 601 is connected to the narrowband service board interface 602 through the first relay J1, the low pass filter 604 and the second relay J2, and meanwhile, the subscriber line interface 601 is connected to the integration board interface 603 through the first relay J1, the third relay J3 and the isolation capacitor 605.

When the first base point K1 is connected to the second contact point C2, the second base point K2 is connected to the third contact point C3 and the third base point K3 is connected to the fifth contact point C5, the subscriber line interface 601 is connected to the integration board interface 603 through the first relay J1 and the third relay J3.

When the first base point K1 is connected to the first contact point C1 and the second base point K2 is connected to the third contact point C3, the subscriber line interface 601 is connected to the narrowband service board interface 602 through the first relay J1 and the second relay J2.

The flow of the signal splitting process in the embodiments of the present invention under the three different modes will be described in detail below.

1. ADSL mode

Referring to Figure 7, in the ADSL mode, the first base point K1 is connected to the second contact point C2 in the first relay, the second base point K2 is connected to the fourth contact point C4 in the second relay, and the third base point K3 is connected to the sixth contact point C6 in the third relay.

The signal obtained from the subscriber line interface 601 is divided into two parts, one part is converted to the narrowband signal via the low pass filter 604, and sent to the narrowband service board 501 via the narrowband service board interface 602; the other part passes through the isolation capacitor 605, the broadband signal is obtained after the narrowband feeding is isolated, and the broadband signal is sent to the integration board 503 via the integration board interface 603.

In this mode, the subscriber line is connected to the splitter board via the front end. With the splitting process, the broadband signal and the narrowband signal are split and output from the ADSL port and the POTS port on the splitter board respectively.

2. COMBO mode

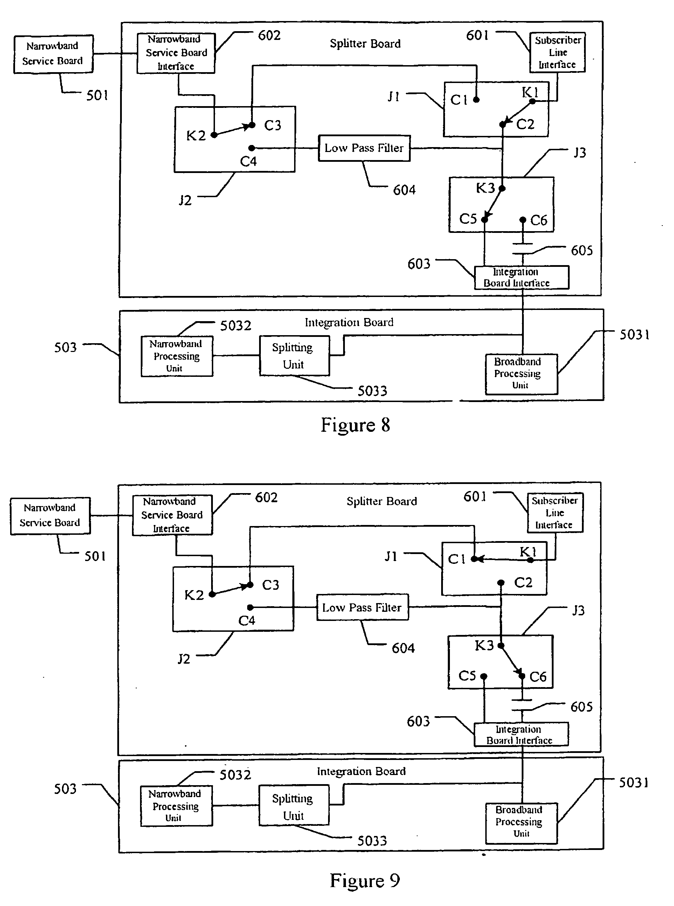

Referring to Figure 8, in the COMBO mode, the first base point K1 is connected to the second contact point C2 in the first relay, the second base point K2 is connected to the third contact point C3 in the second relay, and the third base point K3 is connected to the fifth contact point C5 in the third relay.

The subscriber line is disconnected from the narrowband service board, and the splitter board sends the broadband signal and the narrowband signal to the integration board 503 simultaneously for processing. Here, the splitter board is only used for transparent transmission. In the present embodiment, transparent transmission means that the subscriber signal is sent directly to the integration board, and no processing on the subscriber signal is carried out.

3. Testing mode

Referring to Figure 9, in the BYPASS mode, the first base point K1 is connected to the first contact point C1 in the first relay, the second base point K2 is connected to the third contact point C3 in the second relay, and the status of the third relay is arbitrary.

In this mode, the subscriber line is connected directly to the PSTN end, and all the other paths are interrupted, so that the PSTN port may conduct testing on the single board.

In the ADSL mode, the central office end may respectively control the broadband/narrowband service, and may master the on/off of the broadband/narrowband service on the same line without impact on the broadband/narrowband service.

The capacity of the original equipment may be doubled when the integration board is switched to the COMBO mode. In the ADSL mode, the splitter board occupies a slot. The splitter board sends a broadband signal split from the signal on the subscriber line LINE1 to the broadband service board via the ADSL port on the board, and sends a narrowband signal to the PSTN processing port via the POTS port on the board. Since the splitter board uses a normal service slot, and in the COMBO mode the splitter board is only used for transparent transmission of the signal, thus the capacity may be doubled easily by pulling out the splitter board and inserting a service board into the original slot if a capacity expansion is necessary.

The method and system for signal splitting and a splitter board provided by the embodiments of the present invention is described above in detail. Particular examples are used herein to illustrate the principles and embodiments of the present invention. The description of the above embodiments is used only for better understanding the method of the present invention. In addition, for those skilled in the art, modifications are possible to both the embodiments and application range. Therefore, the specification is not intended to limit the present invention; the scope of which is defined in the appended claims.

## Claims

1. A splitter board (502), comprising: a subscriber line interface (601), an integration board interface (603), a narrowband service board interface (602), a low pass filter (604) and at least three switching devices (J1, J2, J3), wherein the switching devices (J1, J2, J3) are configured to switch a subscriber signal according to an operation mode of an integration board (503), so that:
when the operation mode is a broadband processing mode, the subscriber signal received via the subscriber line interface (601) is divided into a first subscriber signal and a second subscriber signal, the first subscriber signal is sent to the narrowband service board interface (602) via the low pass filter (604), and the second subscriber signal is sent to the integration board interface (603);
when the operation mode is a combination processing mode, the subscriber signal received via the subscriber line interface (601) is sent to the integration board interface (603) directly; and
when the operation mode is a detecting mode, the subscriber signal received via the subscriber line interface (601) is sent to the narrowband service board interface (602) directly.

2. The splitter board (502) according to claim 1, wherein the splitter board (502) further comprises an isolation capacitor (605).

3. The splitter board (502) according to claim 2, wherein the switching devices comprise a first relay (J1), a second relay (J2), and a third relay (J3);
the first relay (J1) comprises a first base point (K1), a first contact point (C1) and a second contact point (C2), the second relay (J2) comprises a second base point (K2), a third contact point (C3) and a fourth contact point (C4), the third relay (J3) comprises a third base point (K3), a fifth contact point (C5) and a sixth contact point (C6);
when the operation mode is the broadband processing mode, the first base point (K1) is connected to the second contact point (C2), the second base point (K2) is connected to the fourth contact point (C4) and the third base point (K3) is connected to the sixth contact point (C6), the subscriber line interface is connected to the narrowband service board interface through the first relay (J1), the low pass filter and the second relay (J2), and meanwhile, the subscriber line interface is connected to the integration board interface through the first relay (J1), the third relay (J3) and the isolation capacitor;
when the operation mode is the combination processing mode, the first base point (K1) is connected to the second contact point (C2), the second base point (K2) is connected to the third contact point (C3) and the third base point (K3) is connected to the fifth contact point (C5), the subscriber line interface is connected to the integration board interface through the first relay (J1) and the third relay (J3); and
when the operation mode is the detecting mode, the first base point (K1) is connected to the first contact point (C1) and the second base point (K2) is connected to the third contact point (C3), the subscriber line interface is connected to the narrowband service board interface through the first relay (J1) and the second relay (J2).

4. A system for signal splitting, which comprises a splitter board (502) according to claim 1, further comprising: an integration board (503) connected with the splitter board (502), the integration board (503) is adapted to receive and process a signal from the splitter board (502) in a broadband processing mode and a combination processing mode.

5. The system according to claim 4, wherein the system further comprises a narrowband service board (501), which is adapted to receive a narrowband signal split out by the splitter board (502) when the operation mode of the integration board (503) is a broadband processing mode or a detecting mode.

6. The system according to claim 4 or 5, wherein the integration board (503) comprises:
a splitting unit (5033), a broadband processing unit (5031) and a narrowband processing unit (5032); the splitting unit (5033) is adapted to receive the subscriber signal from the splitter board (502) in the combination processing mode, and split the subscriber signal into a broadband signal and a narrowband signal; the broadband processing unit (5031) is adapted to process the broadband signal sent by the splitter board (502) in the broadband processing mode, and process the broadband signal split out by the splitting unit (5033) in the combination processing mode; and the narrowband processing unit (5032) is adapted to process the narrowband signal split out by the splitting unit (5033) in the combination processing mode.

7. A method for signal splitting, comprising:
obtaining an operation mode of an integration board (503); and
processing, by a splitter board (502) according to claim 1, a subscriber signal received in accordance with the operation mode.

8. The method according to claim 7, further comprising:
splitting and sending, by the splitter board (502), the subscriber signal when the operation mode is a broadband processing mode;
performing, by the splitter board (502), transparent transmission for the subscriber signal when the operation mode is an combination processing mode; and
forwarding, by the splitter board (502), the subscriber signal when the operation mode is a detecting mode;
wherein performing, by the splitter board (502), transparent transmission for the subscriber signal comprises: sending the subscriber signal received to the integration board (503) directly.

9. The method according to claim 8, wherein splitting and sending, by the splitter board (502), the subscriber signal comprises:
dividing the subscriber signal into a first subscriber signal and a second subscriber signal;
obtaining a narrowband signal by passing the first subscriber signal through a low pass filter (604) on the splitter board (502), and sending the narrowband signal to a narrowband service board (501);
obtaining a broadband signal by passing the second subscriber signal through an isolation capacitor (605) on the splitter board, (502) and sending the broadband signal to the integration board (503).

10. The method according to claim 8, wherein forwarding, by the splitter board (502), the subscriber signal comprises: sending the subscriber signal received to a narrowband service board (501) directly.

## Patentansprüche

1. Teilerplatte (502), die Folgendes umfasst: eine Teilnehmerleitungsschnittstelle (601), eine Integrationsplattenschnittstelle (603), eine Schmalbanddienstplattenschnittstelle (602), ein Tiefpassfilter (604) und wenigstens drei Vermittlungsvorrichtungen (J1, J2, J3), wobei die Vermittlungsvorrichtungen (J1, J2, J3) konfiguriert sind, ein Teilnehmersignal in Übereinstimmung mit einer Betriebsart einer Integrationsplatte (503) so zu vermitteln, dass:
dann, wenn die Betriebsart eine Breitbandverarbeitungsbetriebsart ist, das über die Teilnehmerleitungsschnittstelle (601) empfangene Teilnehmersignal in ein erstes Teilnehmersignal und ein zweites Teilnehmersignal unterteilt wird, wobei das erste Teilnehmersignal über das Tiefpassfilter (604) zu der Schmalbanddienstplattenschnittstelle (602) gesendet wird und das zweite Teilnehmersignal zu der Integrationsplattenschnittstelle (603) gesendet wird;
dann, wenn die Betriebsart eine Kombinationsverarbeitungsbetriebsart ist, das über die Teilnehmerleitungsschnittstelle (601) empfangene Teilnehmersignal direkt zu der Integrationsplattenschnittstelle (603) gesendet wird; und
dann, wenn die Betriebsart eine Detektionsbetriebsart ist, das über die Teilnehmerleitungsschnittstelle (601) empfangene Teilnehmersignal direkt zu der Schmalbanddienstplattenschnittstelle (602) gesendet wird.

2. Teilerplatte (502) nach Anspruch 1, wobei die Teilerplatte (502) ferner einen Trennkondensator (605) umfasst.

3. Teilerplatte (502) nach Anspruch 2, wobei die Vermittlungsvorrichtungen ein erstes Relais (J1), ein zweites Relais (J2) und ein drittes Relais (J3) umfassen;
das erste Relais (J1) einen ersten Basispunkt (K1), einen ersten Kontaktpunkt (C1) und einen zweiten Kontaktpunkt (C2) umfasst, das zweite Relais (J2) einen zweiten Basispunkt (K2), einen dritten Kontaktpunkt (C3) und einen vierten Kontaktpunkt (C4) umfasst und das dritte Relais (J3) einen dritten Basispunkt (K3), einen fünften Kontaktpunkt (C5) und einen sechsten Kontaktpunkt (C6) umfasst;
dann, wenn die Betriebsart die Breitbandverarbeitungsbetriebsart ist, der erste Basispunkt (K1) mit dem zweiten Kontaktpunkt (C2) verbunden ist, der zweite Basispunkt (K2) mit dem vierten Kontaktpunkt (C4) verbunden ist und der dritte Basispunkt (K3) mit dem sechsten Kontaktpunkt (C6) verbunden ist, die Teilnehmerleitungsschnittstelle über das erste Relais (J1), das Tiefpassfilter und das zweite Relais (J2) mit der Schmalbanddienstplattenschnittstelle verbunden ist und gleichzeitig die Teilnehmerleitungsschnittstelle über das erste Relais (J1), das dritte Relais (J3) und den Trennkondensator mit der Integrationsplattenschnittstelle verbunden ist;
dann, wenn die Betriebsart die Kombinationsverarbeitungsbetriebsart ist, der erste Basispunkt (K1) mit dem zweiten Kontaktpunkt (C2) verbunden ist, der zweite Basispunkt (K2) mit dem dritten Kontaktpunkt (C3) verbunden ist und der dritte Basispunkt (K3) mit dem fünften Kontaktpunkt (C5) verbunden ist, die Teilnehmerleitungsschnittstelle über das erste Relais (J1) und das dritte Relais (J3) mit der Integrationsplattenschnittstelle verbunden ist; und
dann, wenn die Betriebsart die Detektionsbetriebsart ist, der erste Basispunkt (K1) mit dem ersten Kontaktpunkt (C1) verbunden ist und der zweite Basispunkt (K2) mit dem dritten Kontaktpunkt (C3) verbunden ist, die Teilnehmerleitungsschnittstelle über das erste Relais (J1) und das zweite Relais (J2) mit der Schmalbanddienstplattenschnittstelle verbunden ist.

4. System zur Signalteilung, das eine Teilerplatte (502) nach Anspruch 1 umfasst und ferner Folgendes umfasst: eine Integrationsplatte (503), die mit der Teilerplatte (502) verbunden ist, wobei die Integrationsplatte (503) dazu ausgelegt ist, ein Signal von der Teilerplatte (502) in einer Breitbandverarbeitungsbetriebsart und einer Kombinationsverarbeitungsbetriebsart zu empfangen und zu verarbeiten.

5. System nach Anspruch 4, wobei das System ferner eine Schmalbanddienstplatte (501) umfasst, die dazu ausgelegt ist, ein durch die Teilerplatte (502) abgeteiltes Schmalbandsignal zu empfangen, wenn die Betriebsart der Integrationsplatte (503) eine Breitbandverarbeitungsbetriebsart oder eine Detektionsbetriebsart ist.

6. System nach Anspruch 4 oder 5, wobei die Integrationsplatte (503) Folgendes umfasst:
eine Teilungseinheit (5033), eine Breitbandverarbeitungseinheit (5031) und eine Schmalbandverarbeitungseinheit (5032); wobei die Teilungseinheit (5033) dazu ausgelegt ist, das Teilnehmersignal von der Teilerplatte (502) in der Kombinationsverarbeitungsbetriebsart zu empfangen und das Teilnehmersignal in ein Breitbandsignal und ein Schmalbandsignal zu teilen; die Breitbandverarbeitungseinheit (5031) dazu ausgelegt ist, das von der Teilerplatte (502) gesendete Breitbandsignal in der Breitbandverarbeitungsbetriebsart zu verarbeiten und das durch die Teilungseinheit (5033) abgeteilte Breitbandsignal in der Kombinationsverarbeitungsbetriebsart zu verarbeiten; und die Schmalbandverarbeitungseinheit (5032) dazu ausgelegt ist, das durch die Teilungseinheit (5033) abgeteilte Schmalbandsignal in der Kombinationsverarbeitungsbetriebsart zu verarbeiten.

7. Verfahren zur Signalteilung, das Folgendes umfasst:
Erhalten einer Betriebsart einer Integrationsplatte (503); und
Verarbeiten eines in Übereinstimmung mit der Betriebsart empfangenen Teilnehmersignals durch eine Teilerplatte (502) nach Anspruch 1.

8. Verfahren nach Anspruch 7, das ferner Folgendes umfasst:
Teilen und Senden des Teilnehmersignals durch die Teilerplatte (502), wenn die Betriebsart eine Breitbandverarbeitungsbetriebsart ist;
Ausführen einer transparenten Übertragung für das Teilnehmersignal durch die Teilerplatte (502), wenn die Betriebsart eine Kombinationsverarbeitungsbetriebsart ist; und
Weiterleiten des Teilnehmersignals durch die Teilerplatte (502), wenn die Betriebsart eine Detektionsbetriebsart ist;
wobei das Ausführen der transparenten Übertragung für das Teilnehmersignal durch die Teilerplatte (502) Folgendes umfasst: direktes Senden des empfangenen Teilnehmersignals zu der Integrationsplatte (503).

9. Verfahren nach Anspruch 8, wobei das Teilen und Senden des Teilnehmersignals durch die Teilerplatte (502) Folgendes umfasst:
Unterteilen des Teilnehmersignals in ein erstes Teilnehmersignal und ein zweites Teilnehmersignal;
Erhalten eines Schmalbandsignals durch Schicken des ersten Teilnehmersignals durch ein Tiefpassfilter (604) auf der Teilerplatte (502) und Senden des Schmalbandsignals zu einer Schmalbanddienstplatte (501);
Erhalten eines Breitbandsignals durch Schicken des zweiten Teilnehmersignals durch einen Trennkondensator (605) auf der Teilerplatte (502) und Senden des Breitbandsignals zu der Integrationsplatte (503).

10. Verfahren nach Anspruch 8, wobei das Weiterleiten des Teilnehmersignals durch die Teilerplatte (502) Folgendes umfasst: direktes Senden des empfangenen Teilnehmersignals zu einer Schmalbanddienstplatte (501).

## Revendications

1. Carte de séparation (502), comprenant : une interface (601) de ligne d'abonné, une interface (603) de carte d'intégration, une interface (602) de carte de service à bande étroite, un filtre passe-bas (604) et au moins trois dispositifs de commutation (J1, J2, J3), les dispositifs de commutation (J1, J2, J3) étant configurés pour commuter un signal d'abonné en fonction d'un mode de fonctionnement d'une carte d'intégration (503) de sorte que :
si le mode de fonctionnement est un mode de traitement à large bande, le signal d'abonné reçu par le biais de l'interface (601) de ligne d'abonné est divisé en un premier signal d'abonné et un deuxième signal d'abonné, le premier signal d'abonné est transmis à l'interface (602) de carte de service à bande étroite par le biais du filtre passe-bas (604) et le deuxième signal d'abonné est transmis à l'interface (603) de carte d'intégration ;
si le mode de fonctionnement est un mode de traitement combinatoire, le signal d'abonné reçu par le biais de l'interface (601) de ligne d'abonné est directement transmis à l'interface (603) de carte d'intégration ; et
si le mode de fonctionnement est un mode de détection, le signal d'abonné reçu par le biais de l'interface (601) de ligne d'abonné est directement transmis à l'interface (602) de carte de service à bande étroite.

2. Carte de séparation (502) selon la revendication 1, la carte de séparation (502) comprenant en outre un condensateur d'isolement (605).

3. Carte de séparation (502) selon la revendication 2, les dispositifs de commutation comprenant un premier relais (J1), un deuxième relais (J2) et un troisième relais (J3) ;
le premier relais (J1) comprenant un premier point de base (K1), un premier point de contact (C1) et un deuxième point de contact (C2), le deuxième relais (J2) comprenant un deuxième point de base (K2), un troisième point de contact (C3) et un quatrième point de contact (C4), le troisième relais (J3) comprenant un troisième point de base (K3), un cinquième point de contact (C5) et un sixième point de contact (C6) ;
si le mode de fonctionnement est le mode de traitement à large bande, le premier point de base (K1) étant relié au deuxième point de contact (C2), le deuxième point de base (K2) étant relié au quatrième point de contact (C4) et le troisième point de base (K3) étant relié au sixième point de contact (C6), l'interface de ligne d'abonné étant reliée à l'interface de carte de service à bande étroite par le premier relais (J1), le filtre passe-bas et le deuxième relais (J2), et l'interface de ligne d'abonné étant par ailleurs reliée à l'interface de carte d'intégration par le premier relais (J1), le troisième relais (J3) et le condensateur d'isolement ;
si le mode de fonctionnement est le mode de traitement combinatoire, le premier point de base (K1) étant relié au deuxième point de contact (C2), le deuxième point de base (K2) étant relié au troisième point de contact (C3) et le troisième point de base (K3) étant relié au cinquième point de contact (C5), l'interface de ligne d'abonné étant reliée à l'interface de carte d'intégration par le premier relais (J1) et le troisième relais (J3) ; et
si le mode de fonctionnement est le mode de détection, le premier point de base (K1) étant relié au premier point de contact (C1) et le deuxième point de base (K2) étant relié au troisième point de contact (C3), l'interface de ligne d'abonné étant reliée à l'interface de carte de service à bande étroite par le premier relais (J1) et le deuxième relais (J2).

4. Système de séparation de signal, comprenant une carte de séparation (502) selon la revendication 1, comprenant en outre : une carte d'intégration (503) reliée à la carte de séparation (502), la carte d'intégration (503) étant conçue pour recevoir et traiter un signal issu de la carte de séparation (502) dans un mode de traitement à large bande et un mode de traitement combinatoire.

5. Système selon la revendication 4, le système comprenant en outre une carte de service à bande étroite (501), conçue pour recevoir un signal à bande étroite séparé par la carte de séparation (502) si le mode de fonctionnement de la carte d'intégration (503) est un mode de traitement à large bande ou un mode de détection.

6. Système selon la revendication 4 ou 5, la carte d'intégration (503) comprenant : une unité de séparation (5033), une unité de traitement à large bande (5031) et une unité de traitement à bande étroite (5032) ; l'unité de séparation (5033) étant conçue pour recevoir le signal d'abonné issu de la carte de séparation (502) dans le mode de traitement combinatoire et séparer le signal d'abonné en un signal à large bande et un signal à bande étroite ; l'unité de traitement à large bande (5031) étant conçue pour traiter le signal à large bande transmis par la carte de séparation (502) dans le mode de traitement à large bande et traiter le signal à large bande séparé par l'unité de séparation (5033) dans le mode de traitement combinatoire ; et l'unité de traitement à bande étroite (5032) étant conçue pour traiter le signal à bande étroite séparé par l'unité de séparation (5033) dans le mode de traitement combinatoire.

7. Procédé de séparation de signal, comprenant les étapes consistant à :
obtenir un mode de fonctionnement d'une carte d'intégration (503) ; et
traiter, au moyen d'une carte de séparation (502) selon la revendication 1, un signal d'abonné reçu en fonction du mode de fonctionnement.

8. Procédé selon la revendication 7, comprenant en outre les étapes consistant à :
séparer et transmettre, au moyen de la carte de séparation (502), le signal d'abonné si le mode de fonctionnement est un mode de traitement à large bande ;
réaliser, au moyen de la carte de séparation (502), une transmission transparente pour le signal d'abonné si le mode de fonctionnement est un mode de traitement combinatoire ; et
réacheminer, au moyen de la carte de séparation (502), le signal d'abonné si le mode de fonctionnement est un mode de détection ;
l'étape consistant à réaliser, au moyen de la carte de séparation (502), une transmission transparente pour le signal d'abonné comprenant l'étape consistant à : transmettre le signal d'abonné reçu directement à la carte d'intégration (503).

9. Procédé selon la revendication 8, l'étape consistant à séparer et transmettre, au moyen de la carte de séparation (502), le signal d'abonné comprenant les étapes consistant à :
diviser le signal d'abonné en un premier signal d'abonné et un deuxième signal d'abonné ;
obtenir un signal à bande étroite en faisant passer le premier signal d'abonné par un filtre passe-bas (604) sur la carte de séparation (502), et transmettre le signal à bande étroite à une carte de service à bande étroite (501) ;
obtenir un signal à large bande en faisant passer le deuxième signal d'abonné par un condensateur d'isolement (605) sur la carte de séparation (502), et transmettre le signal à large bande à la carte d'intégration (503).

10. Procédé selon la revendication 8, l'étape consistant à réacheminer, au moyen de la carte de séparation (502), le signal d'abonné comprenant l'étape consistant à :
transmettre le signal d'abonné reçu directement à une carte de service à bande étroite (501).
